# EUROPEAN PATENT APPLICATION

(11) **EP 3 757 789 A1**
(43) Date of publication of application: **30.12.2020**
(21) Application number: 20181598.2
(22) Date of filing: 23.06.2020
(51) Int. Cl.: G06F 9/50, G06N 20/00

(54) **MANAGED EDGE LEARNING IN HETEROGENEOUS ENVIRONMENTS**

(30) Priority: 26.06.2019 US 201916453204
(71) Applicant: HERE Global B.V., 5611 ZT Eindhoven (NL)
(72) Inventor: Capota, Catalin, Palatine, IL 60067 (US); Sprague, Michael, London, W11 3AP (GB); Scavuzzo, Marco, 5692 VE Son en Breugel (NL); Jalalirad, Amir, 5611 AZ Eindhoven (NL); Do, Lyman, Bellevue, WA 98006 (US); Divakaruni, Bala, Aurora, IL 60504 (US)
(74) Representative: Potter Clarkson

(57) **Abstract**

Systems and methods are provided for managing machine learning processes within distributed and heterogeneous environments. The distributed and heterogeneous environments may include different types of devices that include different specifications, security, and privacy concerns. The devices participate in complex machine learning tasks while maintaining both privacy and autonomy. The systems and methods manage the lifecycle of how machine learning workloads are distributed.

## Description

### FIELD

The following disclosure relates to location, navigation, and/or mapping services.

### BACKGROUND

Many technologies involve massive amounts of data collection and collaborative intelligence that processes and analyzes the data. Internet of things (IoT), autonomous driving, or image recognition technologies are examples where data from remote sensors is continuously collected, communicated, and processed to make inferences about the state of a system, or predictions about future states. The data includes everything from user habits to images to audio and more. Analysis of the data could improve learning models and user experiences. For example, language models can improve speech recognition and text entry, and image models can help automatically identify photos.

The complex problem of training these models could be solved by large scale distributed computing by taking advantage of the resource storage, computing power, cycles, content, and bandwidth of participating devices available at edges of a network. In such a distributed machine learning scenario, the dataset is transmitted to or stored among multiple edge devices. The devices solve a distributed optimization problem to collectively learn the underlying model. For distributed computing, similar (or identical) datasets may be allocated to multiple devices that are then able to solve a problem in parallel.

However, privacy and connectivity concerns may prohibit data from being shared between devices preventing largescale distributed methods. Users may prefer to not share voice, video, or images with other devices or unknown users. Devices may not be simultaneously or continuously connected and may contain disparate data sets. Bandwidth concerns may prohibit timely sharing of data.

One technique for alleviating privacy and connectivity concerns is for the data for training the models to remain at the edge devices. Privacy of the data is maintained along with limiting communication issues. However, solutions for machine learning on edge devices is generally limited to inference. Models have been developed, tested and versioned on a backend server in a homogenous environment. There are no current systems that support developing, training, evaluating, versioning, rollback, or a fully supported management of all stages of the machine learning lifecycle or capability to do full end-to-end development and release of models on edge devices or decentralized group structures. Furthermore, modern cloud offerings, software solutions and frameworks are limited in functionality and geared towards building and training models on single system or single backend/cloud server deployment within a single organization boundary. There are no current cloud providers or vendors offering solutions that enable one to perform all stages of development/release across organizational boundaries, geographic boundaries or directly on edge devices.

### SUMMARY

In an embodiment, a system is provided for assigning a machine learning task to a plurality of devices. The system comprises a device catalog, a campaign catalog, and at least one parameter server. The device catalog is configured to store device attributes of a plurality of devices. The campaign catalog is configured to store control parameters and the machine learning task, the campaign catalog configured to select a set of participating devices from the plurality of devices as a function of the device attributes, the machine learning task, and the control parameters; the campaign catalog configured to communicate the machine learning task and model parameters to the set of participating devices. The at least one parameter server is configured to communicate with each device of the set of participating devices and update the machine learning task and the model parameters as a function of model parameters received from the set of participating devices.

In an embodiment, a method is provided for assigning a machine learning task in a heterogenous environment. A processor selects a model for the machine learning task to be deployed, the model stored within a model repository. The processor selects a set of participating devices that meet one or more campaign requirements for data availability, compute capability or privacy restrictions. The processor transmits a campaign configuration to each of the set of participating devices. The processor transmits the model and model parameters to each of the set of participating devices. The processor monitors the set of participating devices, wherein the set of participating devices are configured for training the model using a locally acquired data instance, the set of participating devices further configured to transmit a parameter vector of the trained model to the processor and receive in response, an updated central parameter vector from the processor; the set of participating devices further configured to retrain the model using the updated central parameter vector. The processor outputs the trained model.

In an embodiment, a computer-readable, non-transitory medium is provided. The computer-readable, non-transitory medium stores a program that causes a computer to execute a method comprising: registering, by a campaign server, a plurality of devices; storing, by the campaign server, a device profile of each of the registered plurality of devices; initiating, by the campaign server, a campaign with a subset of devices that meet a set of campaign requirements and a model; transmitting, by the campaign server, the model to the subset of devices; monitoring, by the campaign server, a training process by the subset of devices; terminating, by the campaign server, the campaign; and outputting, by the campaign server, a trained model.

The following numbered paragraphs are also disclosed:
1. A campaign management system for assigning a machine learning task to a plurality of devices, the campaign management system comprising:
   a device catalog configured to store device attributes of a plurality of devices;
   a campaign catalog configured to store control parameters and the machine learning task, the campaign catalog configured to select a set of participating devices from the plurality of devices as a function of the device attributes, the machine learning task, and the control parameters; the campaign catalog configured to communicate the machine learning task and model parameters to the set of participating devices; and
   at least one parameter server configured to communicate with each device of the set of participating devices and update the machine learning task and the model parameters as a function of model parameters received from the set of participating devices.
2. The campaign management system of paragraph 1, wherein the device catalog is further configured to register the plurality of devices with the campaign management system.
3. The campaign management system of paragraph 1, wherein the device catalog is further configured to store a current state of each device of the plurality of devices.
4. The campaign management system of paragraph 1, wherein the device attributes comprise at least restrictions on what actions each device can perform through licensing of data, usage consent from an owning entity, and physical device properties comprising processing capabilities, memory availability, storage, and restrictions on other allocation of resources.
5. The campaign management system of paragraph 1, wherein the campaign catalog is configured to add or remove at least one device to or from the set of participating devices.
6. The campaign management system of paragraph 1, wherein the campaign catalog is configured to modify campaign parameters or a rate of contribution from individual devices, setup profiles for parameter server deployment schemes, modify control parameters for the machine learning task, add additional devices, modify restrictions, or deploy new models with configurable deployment schemes.
7. The campaign management system of paragraph 1, wherein the campaign catalog is configured to save a state of the machine learning task for restore in case of disaster recovery, recovery from other errors during runtime, or reanimation after the machine learning task is terminated.
8. The campaign management system of paragraph 1, wherein a visibility of devices during selection is controlled by access rights and permission granted by a governing entity and device profile restrictions.
9. The campaign management system of paragraph 1, wherein the machine learning task is training a model to identify a feature in an image.
10. A method for assigning a machine learning task in a heterogenous environment, the method comprising:
   selecting, by a processor, a model for the machine learning task to be deployed, the model stored within a model repository;
   selecting, by the processor, a set of participating devices that meet one or more campaign requirements for data availability, compute capability or privacy restrictions;
   transmitting, by the processor, a campaign configuration, the model, and model parameters to each of the set of participating devices to each of the set of participating devices;
   monitoring, by the processor, the set of participating devices, wherein the set of participating devices are configured for training the model using a locally acquired data instance, the set of participating devices further configured to transmit a parameter vector of the trained model to the processor and receive in response, an updated central parameter vector from the processor, wherein the set of participating devices are further configured to retrain the model using the updated central parameter vector; and
   outputting, by the processor, the trained model.
11. The method of paragraph 10, further comprising:
   registering, by the processor, a device profile for each of the set of participating devices, the device profile comprising data availability, compute capability and privacy restrictions for each of the set of participating devices.
12. The method of paragraph 10, wherein the set of participating devices is selected from a plurality of devices as a function of the data availability, compute capability or privacy restrictions of devices of the plurality of devices.
13. The method of paragraph 10, wherein monitoring the set of participating devices comprises:
   updating the model, the campaign configuration, or the set of participating devices.
14. The method of paragraph 10, wherein the machine learning task is training the model to identify a feature in an image.
15. The method of paragraph 10, wherein monitoring the set of participating devices comprises:
   collecting statistics from the set of participating devices while training the model; and
   updating the campaign configuration as a function of the statistics.
16. A computer-readable, non-transitory medium storing a program that causes a computer to execute a method comprising:
   registering, by a campaign server, a plurality of devices;
   storing, by the campaign server, a device profile of each of the registered plurality of devices;
   initiating, by the campaign server, a campaign with a subset of devices that meet a set of campaign requirements and a model;
   transmitting, by the campaign server, the model to the subset of devices;
   monitoring, by the campaign server, a training process by the subset of devices;
   terminating, by the campaign server, the campaign when the training process finishes; and
   outputting, by the campaign server, a trained model.
17. The computer-readable, non-transitory medium of paragraph 16, wherein monitoring the training process comprises:
   adding a device of the plurality of devices to the subset of devices.
18. The computer-readable, non-transitory medium of paragraph 16, wherein monitoring the training process comprises:
   removing a device of the subset of devices due to a privacy restriction.
19. The computer-readable, non-transitory medium of paragraph 16, wherein monitoring the training process comprises:
   updating the model.
20. The computer-readable, non-transitory medium of paragraph 16, wherein monitoring the training process comprises:
   saving states of the training process as a backup.

### BRIEF DESCRIPTION OF THE DRAWINGS

Exemplary embodiments of the present invention are described herein with reference to the following figures.
Figure 1 depicts an example system for managed edge learning in heterogeneous environments according to an embodiment.
Figure 2 depicts an example system for managed edge learning in heterogeneous environments for a single organizational network according to an embodiment.
Figure 3 depicts an example system for managed edge learning in heterogeneous environments for multiple organizational networks according to an embodiment.
Figure 4 depicts an example map of a geographic region.
Figure 5 depicts an example data structure of a geographic database.
Figure 6 depicts an example method for managed edge learning in heterogeneous environments according to an embodiment.
Figure 7 depicts an example campaign server of the system of Figure 1 for managed edge learning in heterogeneous environments according to an embodiment.
Figure 8 depicts an example method for managed edge learning in heterogeneous environments according to an embodiment.
Figure 9 depicts example device of the system of Figure 1 for managed edge learning in heterogeneous environments according to an embodiment.

### DETAILED DESCRIPTION

Embodiments described herein provide systems and methods for deployment and management of machine learning processes within distributed and heterogeneous environments. The distributed and heterogeneous environments may include different types of devices that include different specifications, security, and privacy concerns. Each device possesses its own local and possibly temporally limited data that prevents each device from learning a model that is sufficiently general. Although the devices cannot generalize the model on their own, through collaboration the devices are able to achieve this generality. To preserve privacy, or because of bandwidth limitations, the devices do not/cannot share their data with any central or peer entities. The devices update each other by communicating the model parameters extracted from the local data.

Embodiments allow the devices to participate in complex machine learning tasks while maintaining both privacy and autonomy. Embodiments manage the lifecycle of how machine learning workloads are distributed. In the move from a controlled homogenous environment to the heterogenous environment of the real world, many problems and issues arise. Problems encountered when deploying machine learning models in heterogeneous environments include both deployment and management issues. For example, each device may or may not be capable of running a given model. Data access and usage restrictions may prevent initial access or may be updated in the middle of the process. Devices may move between different geographical or regulatory areas. Ownership of devices may fluctuate or change over a short period of time. Each device may include different hardware such as different sensors, cameras, etc. Each device may be used differently and at different times or frequencies. Each of these issues and others need to be managed throughout the lifecycle of the machine learning task and beyond. Management may include such functions as transitioning a set of devices from one software version to the next, versioning and labeling of software versions, deployment and rollback techniques, monitoring of device versioning and deployment status, transitioning devices from different lifecycle phases (training, testing, inference), checkpointing learning parameters and restoration of learned state, error/failure Handling and Recovering, and other campaign / lifecycle functions.

Additional problems may arise from the device participating in communal learning. For example, malicious devices should be prevented from affecting overall learning rate and quality. Customized learning is supported in segments while supporting general learning on global level. Embodiments provide a solution to the management, configuration, runtime and termination of machine learning campaigns on large numbers of device, with diverse deployment characteristics that are capable of machine learning.

Embodiments provide an ecosystem configured to support machine learning and artificial intelligence workloads from start to end of life no matter where the workload will run, including hybrid environments of datacenters, geographic areas and edge/IoT devices. Embodiment provide the coordination and services required to enable these workloads in scenarios where the learning/processed data is no longer centralized or wholly available on a single device. Embodiments further provide managed artificial intelligence processes to operate on swarms of heterogeneous devices participating in communal learning.

As described here within, machine learning provides a technique for devices to learn to iteratively identify a solution not known a priori or without being programmed explicitly to identify the solution. Machine learning uses two types of techniques: supervised learning, which trains a model on known input and output data so that the model may predict future outputs, and unsupervised learning, which finds hidden patterns or intrinsic structures in input data. Both techniques require large amounts of data to "learn" to generate an accurate output.

Supervised machine learning teaches a model using a large known (labeled) set of data. The training method takes the labeled set and trains a model to generate predictions for a response to new data. The model, in other words, is taught to recognize patterns (sometimes complex) in labeled data and then applies the patterns to new data. Different techniques may be used for supervised learning including, for example, classification, regression, and/or adversarial techniques.

Classification techniques predict discrete responses, for example, whether an email is genuine or spam, whether an image depicts a cat or dog, whether a tumor is cancerous or benign. Classification models classify input data into categories. Some applications of classification include object identification, medical imaging, speech recognition, and credit scoring. Classification techniques may be used on data that can be tagged, categorized, or separated into specific groups or classes. For example, applications for hand-writing recognition and image recognition use classification to recognize letters and numbers. Classification techniques may use optimization methods such as gradient descent. Other optimization techniques may also be used. Common algorithms for performing classification include support vector machine (SVM), boosted and bagged decision trees, k-nearest neighbor, Naive Bayes, linear discriminant analysis, logistic regression, and neural networks.

Regression techniques predict continuous responses, for example, changes in temperature or estimates for sales growth. Some applications of regression techniques include electricity load forecasting and algorithmic trading. Regression techniques may also use optimization methods such as gradient descent or other optimization methods. Common regression algorithms include linear model, nonlinear model, regularization, stepwise regression, boosted and bagged decision trees, neural networks, and adaptive neuro-fuzzy learning.

Adversarial techniques make use of two networks. One network is used to generate an output from a first set of data. The second network operates as a judge to identify if the output data is real or a forgery. Both networks are adjusted during the training process until the first network can generate outputs that, for example, indistinguishable from the real data. Alternative techniques may also be used to train a model.

Classification, regression, and adversarial techniques may be used to solve problems relating to navigation services. In an example of using classification for machine learning training, a method of object identification on the roadway involves capturing images as vehicles drive around. The images may be annotated to identify objects such as road markings, traffic signs, other vehicles, and pedestrians for example. The annotations / labels may be provided by a user or inferred by a user action (e.g. stopping at a stop light). Annotations / labels may also be derived from other sensor data (e.g. LIDAR sensor data used to label image data). The images are input into a large centralized neural network that is trained until the neural network reliably recognizes the relevant elements of the images and is able to accurately classify the objects. A large, disparate set of data is needed to train the neural network. The process of collecting the large data set of labeled objects may run into privacy, bandwidth, and timing issues.

For the machine learning task described herein, the model (also referred to as machine learning model, neural network, or network) may be training using one or more optimization algorithms such as gradient decent. Gradient descent may be used on a large number of devices with each device holding a respective piece of training data without sharing data sets. Training using an optimization method such as gradient descent includes determining how close the model estimates the target function. The determination may be calculated a number of different ways that may be specific to the particular model being trained. The cost function involves evaluating the parameters in the model by calculating a prediction for the model for each training instance in the dataset and comparing the predictions to the actual output values and calculating an average error value (such as a value of squared residuals or SSR in the case of linear regression). In a simple example of linear regression, a line is fit to a set of points. An error function (also called a cost function) is defined that measures how good (accurate) a given line is. In an example, the function inputs the points and return an error value based on how well the line fits the data. To compute the error for a given line, in this example, each point (x, y) is iterated in the data set and the sum the square distances between each point's y value and the candidate line's y value is calculated as the error function.

Gradient descent is used to minimize the error functions. Given a function defined by a set of parameters, gradient descent starts with an initial set of parameter values and iteratively moves toward a set of parameter values that minimize the function. The iterative minimization is based on a function that takes steps in the negative direction of the function gradient. A search for minimizing parameters starts at any point and allows the gradient descent algorithm to proceed downhill on the error function towards a best outcome. Each iteration updates the parameters that yield a slightly different error than the previous iteration. A learning rate variable is defined that controls how large of a step that is taken downhill during each iteration.

Alternative optimization algorithms may be used. For example, stochastic gradient decent is a variation of gradient decent that may be used. Nesterov accelerated gradient (NAG) is another algorithm that solves a problem of momentum when an algorithm reaches the minima i.e. the lowest point on the curve. Adaptive Moment Estimation (Adam) is another method that computes adaptive learning rates for each parameter. In addition to storing an exponentially decaying average of past squared gradients like AdaDelta ,Adam also keeps an exponentially decaying average of past gradients M(t), similar to momentum. Depending on the model, different types of optimization algorithms, e.g. first order or second order (hessian) may be used. Any algorithm that executes iteratively by comparing various solutions until an optimum or a satisfactory solution is found may be used to train the model.

For image processing and computer vision models, unsupervised learning techniques may also be used for object detection and image segmentation. Unsupervised learning identifies hidden patterns or intrinsic structures in the data. Unsupervised learning is used to draw inferences from the datasets that include input data without labeled responses. One example of unsupervised learning technique is clustering. Clustering may be used to identify patterns or groupings in data. Applications for cluster analysis may include, for example, gene sequence analysis, market research, and object recognition. Common algorithms for performing clustering include k-means and k-medoids, hierarchical clustering, Gaussian mixture models, hidden Markov models, self-organizing maps, fuzzy c-means clustering, and subtractive clustering. In an embodiment, systems and methods are provided for training a model on a large number of devices with each device holding its own piece of training data without sharing data sets.

Unsupervised learning algorithms lack individual target variables and instead have the goal of characterizing a data set in general. Unsupervised machine learning algorithms are often used to group (cluster) data sets, e.g., to identify relationships between individual data points (that may include of any number of attributes) and group them into clusters. In certain cases, the output from unsupervised machine learning algorithms may be used as an input for supervised methods. Examples of unsupervised learning include image recognition, forming groups of data based on demographic data, or clustering time series to group millions of time series from sensors into groups that were previously not obvious.

For the machine learning tasks described herein, all the data remains on the edge devices to satisfy privacy concerns. No data is available centrally to train the model. The ratio of data points to devices may be relatively small resulting in the data on each device being non-independently and identically distributed data (non-I.I.D.) (devices have only a subset of data types) and unbalanced (devices have different orders of magnitude of data). The training occurs in a decentralized manner on multiple devices with only the local data available to each device. The multiple devices do not share data. The aggregation of model parameters occurs asynchronously on a centralized parameter server. The aggregation of the model parameters includes a small linear weighting of the locally-trained model parameters to the centrally-stored model parameters that is independent of the number of data points, the staleness of the parameter updates, and the data distribution (e.g. unbalanced non-I.I.D.).

The model may be trained using data from multiple worker devices without sharing data or complicated transmission and timing schemes. Each worker device collects data using a sensor on or about a vehicle. The data may be image data, video data, audio data, text data, personal data, weather data or other types of data. In an example of image data collection and object identification, certain objects in the images are labeled based on an existing model, manual annotation, or validation methods. For example, an object in an image may be labeled as a particular sign as the sign exists at the specified location in a high definition (HD) map database. Using the labeled objects, each worker device may train a locally stored model using a classification technique. Parameters for the locally trained model are transmitted by each of the worker devices to a parameter server.

The implementation of these techniques to a heterogenous environment, however, may cause problems. As discussed above, the problems include the initiating, coordinating, and completing of artificial-intelligence/machine-learning campaigns when applied to non-homogenous devices.

Embodiments provide for the management, configuration, runtime and termination of machine learning campaigns on a large numbers of device, with diverse deployment characteristics that are capable of machine learning. As used herein, the term campaign describes a machine-learning task assigned to a group of devices. The purpose of the campaign is to achieve a specific improvement to a product or learning/algorithm improvement through an artificial-intelligence process using distributed edge devices. A campaign may have one or many sets of devices working together to achieve a particular task. The devices may be organized into logical pools depending on the capabilities of the device or nature of tasks assigned to the devices and even the stage of machine learning they are operating at. A campaign is initiated by selecting a set of devices that meet campaign requirements for data availability, compute capability and licensing/user privacy restrictions.

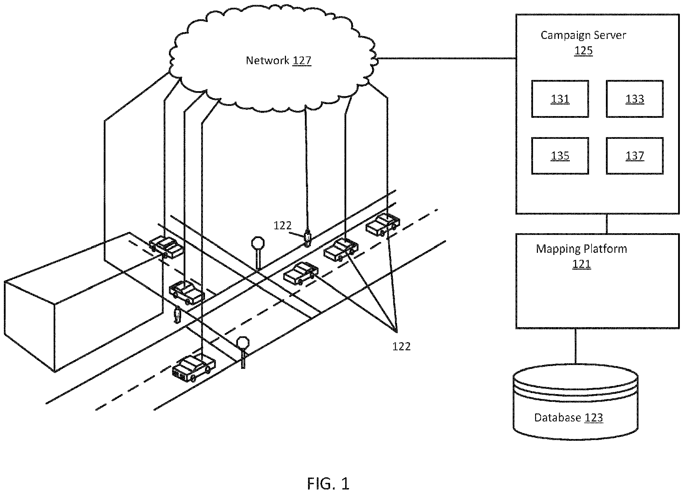

Figure 1 depicts a system for implementing and monitoring an edge learning campaign. The system includes a plurality of devices 122, a network 127, a campaign server 125, and a mapping platform 121. The mapping platform 121 may include or may be connected to a database 123 (also referred to as a geographic database or map database or HD mapping database or HD map). The campaign server 125 may include a device catalog 131, a campaign catalog 133, a model repository 135, and one or more hosted parameter servers 137. Additional, different, or fewer components may be included.

The campaign server 125 is configured to coordinate and control the actions and campaigns of edge devices during their lifecycle. The services may include, for example, core services, edge learning services, and data science services. Core services may include services for securing operation, registration and monitoring of the edge devices as they execute their workloads. Edge Learning Services may include services to support distributed or communal learning across numerous devices, additional services to manage applications. Data Science Services may include services that are geared toward data scientists and system administrators to assist in developing, tuning/optimizing, troubleshooting and managing models as the models run across devices. Capabilities include data sampling and visualization, performance dashboards and lifecycle administration steps. The campaign server may also be configured to instruct the device 122 on which data to use. The campaign server may instruct the device 122 to sample, modify, or otherwise clean acquired data so that the data is compatible with the training process.

The campaign server 125 is configured to enroll devices, update devices, and notify devices of updates or changes to a campaign. The campaign server 125 is configured to initiate, setup, start, modify, backup, restore, monitor, and audit a campaign. The campaign server 125 is configured to store the machine learning models and other artifacts needed for a campaign.

In an embodiment, the campaign server 125 is configured as a cloud service. In another embodiment, the campaign server 125 is configure as part of the mapping platform 121. The campaign server 125 may include a user interface or graphical user interface by which a user interacts with the campaign server 125 to select a campaign and campaign parameters such as the model, model version, types of devices, etc.

The system includes devices 122 (also referred to as edge devices or worker devices 122). The devices may include probe devices, probe sensors, or other devices 122 such as personal navigation devices 122, location aware devices, smart phones mounted on a vehicle, or connected vehicles among other devices. The devices 122 communicate with one another using the network 127. Each device 122 may execute software configured to train a model. Each device 122 may collect and/or store data relating to the model. The data for each device 122 is not independently and identically distributed (non-I.I.D.). The distribution of data on two given devices might be quite different. The data for each device 122 is also unbalanced. The amount of data on two given devices includes different magnitudes of data instances (data points). The devices 122 may include different processing capabilities. For example, certain devices 122 may be configured to process data quicker or slower either as a result of physical specifications or user preferences.

The devices 122 may include probe devices, probe sensors, or other devices 122 such as personal navigation devices 122 or connected vehicles. The device 122 may be a navigation system built into the vehicle and configured to monitor the status of the vehicle. The devices 122 may include mobile phones running specialized applications that collect data as the devices 122 are carried by persons or things traveling the roadway system. The devices 122 may be configured to collect and transmit data including the status of a vehicle. The devices 122 may be configured to monitor conditions near the vehicle. The devices 122 may be configured to provide guidance for a user or vehicle.

The devices 122 may use different sensors such as cameras, light detection and ranging (LIDAR), radar, ultrasonic, or other sensors. Different types of data may be collected by a device 122, for example, image data, weather data, vehicular data, audio data, personal data, among others. For example, image data relating to roadways may be collected that represents features such as road lanes, road edges, shoulders, dividers, traffic signals, signage, paint markings, poles, and all other critical data needed for the safe navigation of roadways and intersections.

The devices 122 may include varying degrees of compute, storage, and network capabilities. For example, different devices 122 such as smartphones, vehicles, smartwatches, network switches and servers each have different compute, storage, and network capabilities. The devices 122 are configured to perform the processing and machine learning algorithms execute. Within the devices 122 is a model execution environment that provides a restricted sandbox for models to be deployed, managed and monitored through the campaign lifecycle. The model execution environment may have access to the device profile that contains a description of the hardware capabilities and configuration of the device 122. The device profile may also include data licenses and restrictions on access. Core services of the device 122 may be used by the running models to support logging, authentication, authorization and access control to onboard sensors and cloud services, and services related to metrics collection, error reporting and deployment/control of models unto the device. The models may obtain data through a data collection interface that makes available local data from the sensors through a common API. The data within the interface may be encoded through a defined schema that is stored within the device profile.

The devices 122 may be pre-allocated to a campaign by the campaign server (statically activated) or be allocated to a group when the campaign is initiated (dynamic activation). Statically activated devices that do not support dynamic deployment of software or services, software and services may be installed and locked during device production or restricted to service/maintenance intervals. Devices most likely to be assigned with static activation may include heightened security concerns. For example, construction equipment (Mining & Farming Machinery) or automotive vehicles may likely be statically activated devices. Dynamically activated devices may be assigned to a campaign at any time by the campaign server. Dynamically activated devices support hot deployment/un-deployment of new software packages. Examples of devices that would be good candidates for dynamic activation are cell phones (application installation/uninstallation), servers, networking equipment, cellular sites.

Each of the devices 122 may download and store a model (e.g. machine-learned network) that is trained by a large number (hundreds, thousands, millions, etc.) of devices 122 with each device 122 holding a set of training data without sharing data sets. Each device 122 may be configured to training the model with gradient descent learning or another optimization algorithm for a respective piece of training data, only sharing learnt parameters of the model with the rest of the network. The device 122 is configured to acquire different training data than other devices that are training the model. The device 122 may be configured to modify acquired training data so that the data is compatible with the model. For example, the device 122 may be configured to transform, sample, or otherwise clean the data or dataset prior to training the model. The device 122 may be configured to add noise to the data in order to prevent the model from focusing on certain personal features.

The devices 122 may be configured to keep training the model locally, without sending model parameters to the parameter server. This would allow each device to obtain and use a more personalized model, which, in turn, could result in better inference results for a user of the device. Each device 122 may locally clone the trained model and keep on training/personalizing the cloned model, by using the data that will be produced by the device 122 from that moment on. Each device 122 will use the cloned model for future inference tasks.

The device 122 may be configured to transform, manipulate and enrich input data before this is used to train a model in a collaborative fashion. The device may be configured to transmit information, e.g. metadata about acquired data that may be used by the device 122 to train the model (e.g., data size, amount of data, data generation rate, etc.). A user of campaign server may select the type of data manipulation or enrichment each device 122 has to perform on data before starting the training process. The selection may be based either on the metadata contained in the campaign server, or on some pre-transferred sample data. The device may be instructed by the Campaign Server 125 to manipulate, enrich or transform the data.

Each of the devices 122 may store a copy of a portion of a geographic database 123 or a full geographic database 123. The geographic database 123 may include data for HD mapping. An HD map or HD map data may be provided to the devices 122 as a cloud-based service. The HD map may include one or more layers. Each layer may offer an additional level of detail for accurate and relevant support to connected and autonomous vehicles. The layers may include, for example, a road model, a lane model, and a localization model. The road model provides global coverage for vehicles to identify local insights beyond the range of the vehicle's onboard sensors such as high-occupancy vehicle lanes, or country-specific road classification. The lane model may provide more precise, lane-level detail such as lane direction of travel, lane type, lane boundary, and lane marking types, to help self-driving vehicles make safer and more comfortable driving decisions. The localization layer provides support for the vehicle to localize the vehicle in the world by using roadside objects like guard rails, walls, signs and pole like objects. The vehicle identifies an object, then uses the object's location to measure backwards and calculate exactly where the vehicle is located.

The devices 122 may include an HD map that is used to navigate or provide navigational services. The devices 122 may also include sensors that capture, for example, image data of features or object on the roadway. As a device 122 traverses a roadway, the device 122 may encounter multiple objects such as other vehicles, cyclists, pedestrians, etc. The device 122 may use the stored model to identify a position of the vehicle, or the identity of the objects. Based on the identification, the device 122 may provide navigation instructions or may provide commands for a vehicle to perform an action.

The devices 122 are configured to communicate with the campaign server. The devices 122 receive at least instructions, updates, the model, and model parameters from the campaign server. The model may be either prepackaged and available on device or dynamically downloaded as a campaign starts and device pools are assigned roles. The devices 122 are configured to initialize the training process by allocating resources for processing. The data is retrieved and preprocessed as needed. The devices 122 are configured for obtaining data, additional processing and preparation and model execution (training, testing or inference).

Each device 122 may store a device profile that is updated when changes occur to the device. The device profile may store attributes or restrictions on what actions a device can perform through licensing of data, usage consent from user/owning entity, or physical device properties (processing capabilities, memory availability, storage, restrictions on other allocation of resources). The device profile may store statistics on performance, powered on time, battery performance and capacity, data creation rates and volumes, and other vital runtime device characteristics. The device profile may provide other attributes to assist in device selection for processing pools or campaigns. Examples would be physical location attributes (GPS Extent of Travel, Country/County), Model information (Software and Hardware Versions, Sensor Versions, Manufacturer, Ownership attributes, or extended attributes attached over time to devices. The device profile may be shared in whole or in part with the campaign server depending on security and privacy restrictions.

One or more devices 122 may be configured as a parameter server 137. The campaign server 125 or the mapping platform 121 may host one or more parameter servers 137. The parameter server 137 may also be configured distinct from the devices 122, campaign server 125, or mapping platform 121. The system may include one or more parameter servers 137. The parameter servers 137 are configured to receive locally trained model parameters from a device 122, adjust centrally stored model parameters, and transmit the adjusted centrally model parameters back to the device. The parameter servers 137 are managed by the campaign server 125. The parameter servers 137 communicate updates and results from the training process to the campaign server 125. The campaign server 125 may identify devices to communicate with the parameter server 137.

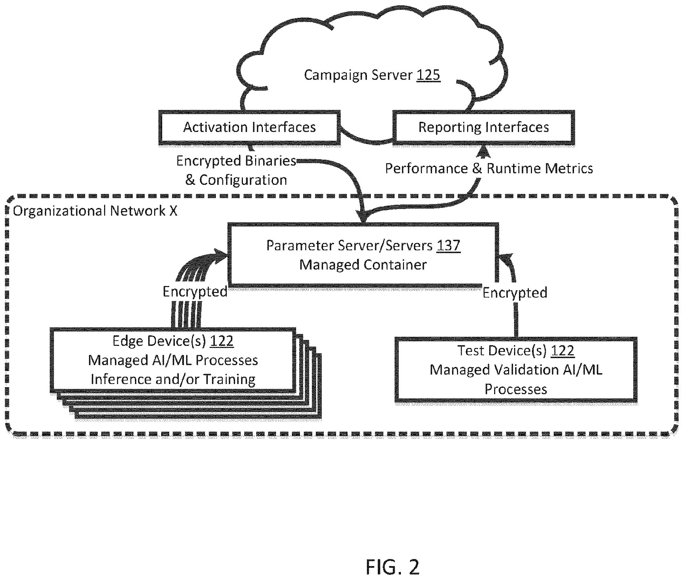

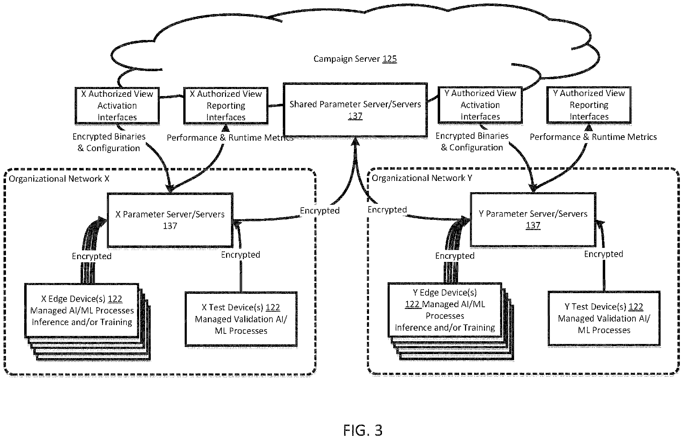

Figures 2 and 3 depicts two different scenarios where the campaign server 125 manages campaigns for a single organization or user and two organizations or users respectively. In Figure 2, there is a single organizational network X that includes one or more parameter servers 137 and devices 122. The devices 122 are depicted as belonging to two groups edge devices 122 and test devices 122. Both sets of devices 122 communicate with the parameter servers 137 using an encrypted transmission. The campaign server 125 communicates with the parameter server 137. The campaign server 125 activates and monitors the parameter server 137 and through the parameter server 137, the devices 122. Figure 3 depicts two organizational networks X and Y. The components are similar to those depicted in Figure 2 However, in Figure 3 the two networks maintain their privacy. The campaign server 125 manages the machine learning task for both networks while keeping privacy and security intact.

The parameter server 137 may also be configured to regulate the frequency / number of transmissions from the devices 122 by setting a threshold number of data points for the devices 122 to process prior to sending an update. The threshold may be set at the start of the process and / or may updated as the training process proceeds. The parameter server 137 communicates with each device 122 of the plurality of devices 122 that are assigned to the parameter server 137. The parameter servers 137 may be configured to aggregate parameters from one or more models that are trained on the devices 122. The parameter servers 137 may be configured to communicate with devices that are located in a same or similar region as the parameter server 137. One or more parameter servers 137 may communicate with one another. The parameter server 137 is configured to communicate asynchronously with the plurality of devices 122. When a device 122 transmits a set of locally trained model parameters, the parameter server 137 adjusts the central model parameters and transmits the adjusted centrally model parameters back to that device. If, for example, two different devices transmit locally trained model parameters, the parameter server 137 performs the adjustment twice, e.g. a first time for the first device that transmitted locally trained model parameters and then a second time for the second device. The parameter server 137 does not wait to batch results or average incoming trained model parameters. Communications between the devices 122 and the parameter server 137 are one to one and serial, not depending on other communication with other devices. Asynchronous communication is the exchange of messages between the device and the parameter server 137 responding as schedules permit rather than according to a clock or an event. Communications between each device 122 and parameter server 137 may occur intermittently rather than in a steady stream.

In an embodiment, one or more parameter servers 137 may be configured as a master parameter server 137. The master parameter server 137 may be configured to communicate with a plurality of parameter servers 137; the master parameter server 137 configured to receive central parameters from the plurality of parameter servers 137; the master parameter server 137 configured to calculate and transmit, in response to a communication from the parameter servers 137 of the plurality of parameter servers 137, a set of global central parameters to a respective parameter server 137 from which the communication originated. In an embodiment, the master parameter server 137 is configured to communicate with both the plurality of parameter servers 137 and the plurality of worker devices. The master parameter server 137 may be controlled or managed by the campaign server 125. The master parameter server 137 and/or parameter servers 137 may be co-located or part of the campaign server 125 or may be located elsewhere.

The parameter server 137 stores a central parameter vector that the parameter server 137 updates each time a device (worker unit) sends a parameter vector to the parameter server 137. A parameter vector may be a collection (e.g. set) of parameters from the model or a representation of the set of parameters. The parameter vector may be a randomly chosen components of a parameter vector. Models may include thousands or millions of parameters. Compressing the set of parameters into a parameter vector may be more efficient for bandwidth and timing than transmitting and recalculating each parameter of the set of parameters. A parameter vector may also be further compressed. In an embodiment, an incoming parameter vector I may also be compressed into a sparse subspace vector. For example, if I = (i_1, i_2,i_3 ,...,i_n), the incoming parameter vector I may be compressed into I'=(i_b1, i_b2, ...,i_bm) prior to transmission where m is smaller than n. After receiving I', at the parameter server 137, I" may be uncompressed into I" = (0, 0, ., i_b1, 0,..., 0, i_b2,..., i_bm,0,...) which is then used as the incoming parameter vector I in Equation 1 described below.

In an embodiment, the update is done using the following equation: $N = \left(1-α\right) * O + α * I$ equation 1
where N = the new central parameter vector;
O = the old (current) central parameter vector;
I = the incoming parameter vector;
Alpha (α) = a fixed real number between 0 and 1;
* denotes the scalar multiplication; and
+ denotes vector addition.
The value of alpha may be adjusted by the campaign server 125 automatically or manually depending on the type of training, the expected number of iterations, and the number of devices. The value of alpha may be changed dynamically during the training process. A lower alpha value discounts the newer incoming parameter, leading to less change in the central parameter vector. A higher alpha value allows for the incoming parameters vectors to quickly change the central parameter vector. The value of alpha may be calculated or set manually or automatically. The update may also use different functions to calculate the new central parameter vector. The new central parameter vector may be calculating using, for example, linear interpolation.

In an embodiment, the parameter server 137 further communicates with other parameter servers 137. A master parameter server 137, for example, may aggregate model parameters from multiple first level parameter servers 137. The system may be configured with multiple levels of aggregation. Similar to receiving locally trained model parameters, each parameter server 137 transmits trained model parameters to the master parameter server 137 and received back master trained model parameters.

In an embodiment, the devices 122 further provide navigation services to an end user or generate commands for vehicular operation. The devices 122 may communicate with the mapping platform 121 through the network 127. The devices 122 may use trained models (using received parameters) to provide data to assist in identifying a location of the device 122, objects in the vicinity of the device 122, or environmental conditions around the device for example.

To provide navigation services, the devices 122 may further receive data from the mapping platform 121. The mapping platform 121 may also receive data from one or more systems or services that may be used to identify the location of a vehicle, roadway features, or roadway conditions. The device 122 may be configured to acquire and transmit map content data on the roadway network to the mapping platform 121. As depicted in Figure 1, the device 122 may be configured to acquire sensor data of a roadway feature and the location of the roadway feature (approximation using positional circuitry or image processing). The device 122 may be configured to identify objects or features in the sensor data using one or more machine leant models. The device 122 may be configured to identify the device's location using one or more models. The one or more models may be trained on multiple distributed devices on locally stored data that is not shared between the devices. The identified objects or features may be transmitted to the mapping platform 121 for storage in a geographic database 123. The geographic database 123 may be used to provide navigation services to the plurality of devices 122 and other users.

The mapping platform 121, campaign server, and devices 122 are connected to the network 127. The devices 122 may receive or transmit data through the network 127 to the other devices 122 or the mapping platform 121. The mapping platform 121 may receive or transmit data through the network 127. The mapping platform 121 may also transmit paths, routes, or feature data through the network 127. The network 127 may include wired networks, wireless networks, or combinations thereof. The wireless network may be a cellular telephone network, LTE (Long-Term Evolution), 4G LTE, a wireless local area network, such as an 802.11, 802.16, 802.20, WiMax (Worldwide Interoperability for Microwave Access) network, DSRC (otherwise known as WAVE, ITS-G5, or 802.11p and future generations thereof), a 5G wireless network, or wireless short-range network. Further, the network 127 may be a public network, such as the Internet, a private network, such as an intranet, or combinations thereof, and may utilize a variety of networking protocols now available or later developed including, but not limited to transmission control protocol/internet protocol (TCP/IP) based networking protocols.

The mapping platform 121 may include multiple servers, workstations, databases, and other machines connected and maintained by a map developer. The mapping platform 121 may be configured to receive data from devices 122 in the roadway. The mapping platform 121 may be configured to identify, verify, and augment features and locations of the features from the observational data. The mapping platform 121 may be configured to update a geographic database 123 with the features and locations. The mapping platform 121 may be configured to provide feature data and location data to devices 122. The mapping platform 121 may also be configured to generate routes or paths between two points (nodes) on a stored map. The mapping platform 121 may be configured to provide up to date information and maps to external geographic databases 123 or mapping applications. The mapping platform 121 may be configured to encode or decode map or geographic data. Feature data may be stored by the mapping platform 121 using geographic coordinates such as latitude, longitude, and altitude or other spatial identifiers. The mapping platform 121 may acquire data relating to the roadway though one or more devices 122.

The mapping platform 121 may be implemented in a cloud-based computing system or a distributed cloud computing service. The mapping platform 121 may include one or more server(s). A server may be a host for a website or web service such as a mapping service and/or a navigation service. The mapping service may provide maps generated from the geographic data of the database 123, and the navigation service may generate routing or other directions from the geographic data of the database 123. The mapping service may also provide information generated from attribute data included in the database 123. The server may also provide historical, future, recent or current traffic conditions for the links, segments, paths, or routes using historical, recent, or real time collected data. The server may receive updates from devices 122 or vehicles on the roadway regarding the HD map. The server may generate routing instructions for devices 122 as a function of HD map updates.

The mapping platform 121 includes the geographic database 123. To provide navigation related features and functions to the end user, the mapping platform 121 accesses the geographic database 123. The mapping platform 121 may update or annotate the geographic database 123 with new or changed features based on observational data from the plurality of devices 122. The plurality of devices 122 may also store a full or partial copy of the geographic database 123.

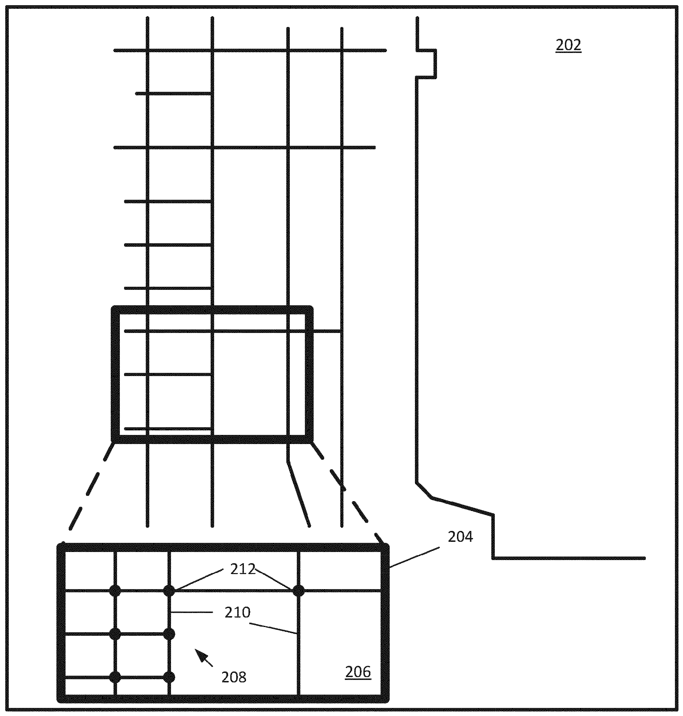

The geographic database 123 includes information about one or more geographic regions. Figure 4 illustrates a map of a geographic region 202. The geographic region 202 may correspond to a metropolitan or rural area, a state, a country, or combinations thereof, or any other area. Located in the geographic region 202 are physical geographic features, such as roads, points of interest (including businesses, municipal facilities, etc.), lakes, rivers, railroads, municipalities, etc.

Figure 4 further depicts an enlarged map 204 of a portion 206 of the geographic region 202. The enlarged map 204 illustrates part of a road network 208 in the geographic region 202. The road network 208 includes, among other things, roads and intersections located in the geographic region 202. As shown in the portion 206, each road in the geographic region 202 is composed of one or more road segments 210. A road segment 210 represents a portion of the road. Each road segment 210 is shown to have associated with it two nodes 212; one node represents the point at one end of the road segment and the other node represents the point at the other end of the road segment. The node 212 at either end of a road segment 210 may correspond to a location at which the road meets another road, i.e., an intersection, or where the road dead ends.

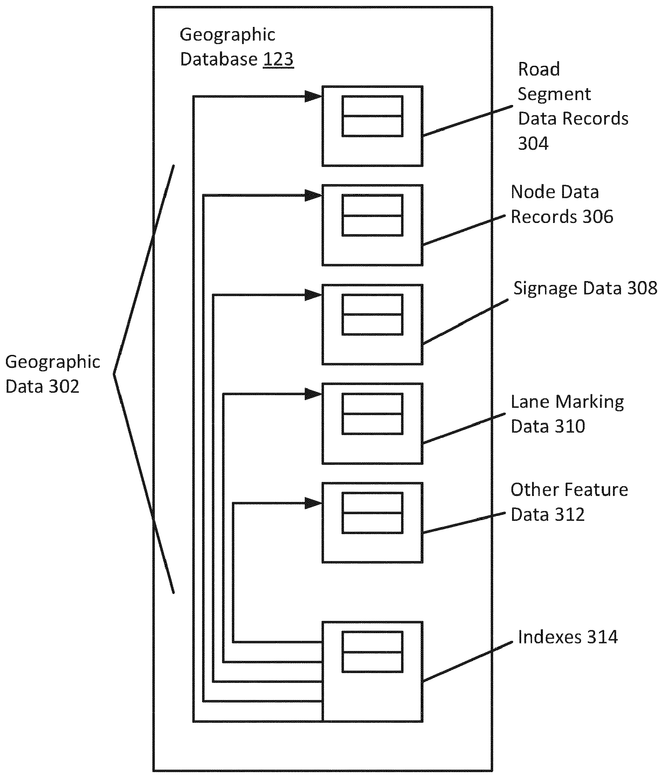

As depicted in Figure 5, in one embodiment, the geographic database 123 contains geographic data 302 that represents some of the geographic features in the geographic region 202 depicted in Figure 4. The data 302 contained in the geographic database 123 may include data that represent the road network 208. In Figure 5, the geographic database 123 that represents the geographic region 202 may contain at least one road segment database record 304 (also referred to as "entity" or "entry") for each road segment 210 in the geographic region 202. The geographic database 123 that represents the geographic region 202 may also include a node database record 306 (or "entity" or "entry") for each node 212 in the geographic region 202. The terms "nodes" and "segments" represent only one terminology for describing these physical geographic features, and other terminology for describing these features is intended to be encompassed within the scope of these concepts.

The geographic database 123 may include feature data 308-312. The feature data 308-312 may represent types of geographic features. For example, the feature data may include signage records 308 that identify the location of signage on the roadway. For example, the signage data 308 may include data for one or more signs (e.g. stop signs, yield signs, caution signs, etc.) that exist on the roadway network. The feature data may include lane features 310 that indicate lane marking on the roadway. The other kinds of feature data 312 may include point of interest data or other roadway features. The point of interest data may include point of interest records comprising a type (e.g., the type of point of interest, such as restaurant, fuel station, hotel, city hall, police station, historical marker, ATM, golf course, truck stop, vehicle chain-up stations etc.), location of the point of interest, a phone number, hours of operation, etc. The feature data may also include painted signs on the road, traffic signal, physical and painted features like dividers, lane divider markings, road edges, center of intersection, stop bars, overpasses, overhead bridges etc. The feature data may be identified from data received by the devices 122. More, fewer or different data records can be provided. In one embodiment, additional data records (not shown) can include cartographic ("carto") data records, routing data, and maneuver data.

The feature data 308-312 may include HD mapping data that may model road surfaces and other map features to decimeter or centimeter-level or better accuracy. An HD map database may include locations data in three dimensions with a spatial resolution of at least a threshold distance to pixel ratio. Example threshold distance ratios include 30 centimeters per pixel (i.e., each pixel in the image for the HD map represents 30 centimeters in the three-dimensional space), 20 centimeters per pixel, or other values. The HD maps may be defined according to the Open Lane Model of the Navigation Data Standard (NDS). The feature data 308-312 may also include lane models that provide the precise lane geometry with lane boundaries, as well as rich attributes of the lane models. The rich attributes include, but are not limited to, lane traversal information, lane types, lane marking types, lane level speed limit information, and/or the like. In one embodiment, the feature data 308-312 are divided into spatial partitions of varying sizes to provide HD mapping data to vehicles 101 and other end user devices 122 with near real-time speed without overloading the available resources of the devices 122 (e.g., computational, memory, bandwidth, etc. resources). The feature data 308-312 may be created from high-resolution 3D mesh or point-cloud data generated, for instance, from LIDAR-equipped vehicles. The 3D mesh or point-cloud data are processed to create 3D representations of a street or geographic environment at decimeter or centimeter-level accuracy for storage in the feature data 308-312. The feature data 308-312 may also include data the is useful for machine learning or computer vision, but not readily attribution to easy categorization as human-recognizable features.

In an embodiment, the feature data 308-312 also include real-time sensor data collected from probe vehicles in the field. The real-time sensor data, for instance, integrates real-time road event data, traffic information, weather, and road conditions (e.g., potholes, road friction, road wear, etc.) with highly detailed 3D representations of street and geographic features to provide precise real-time feature detection at decimeter or centimeter-level accuracy. Other sensor data can include vehicle telemetry or operational data such as windshield wiper activation state, braking state, steering angle, accelerator position, and/or the like.

The geographic database 123 also includes indexes 314. The indexes 314 may include various types of indexes that relate the different types of data to each other or that relate to other aspects of the data contained in the geographic database 123. For example, the indexes 314 may relate the nodes in the node data records 306 with the end points of a road segment in the road segment data records 304. As another example, the indexes 314 may relate feature data such as the signage records 308 with a road segment in the segment data records 304 or a geographic coordinate. The indexes 314 may also store repeating geometry patterns or relationships for links or nodes that represent repeating geometry patterns.

The geographic database 123 may be maintained by a content provider (e.g., a map developer). By way of example, the map developer may collect geographic data to generate and enhance the geographic database 123. The map developer may obtain data from sources, such as businesses, municipalities, or respective geographic authorities. In addition, the map developer may employ field personnel to travel throughout the geographic region to observe features and/or record information about the roadway. Also, remote sensing, such as aerial or satellite photography, can be used.

The geographic database 123 and the data stored within the geographic database 123 may be licensed or delivered on-demand. Other navigational services or traffic server providers may access the traffic data and the regulatory data stored in the geographic database 123. Data including regulation data may be broadcast as a service.

The mapping platform may communicate directly with the devices 122. The mapping platform may also provide data, models, or an interface to the campaign server 125.

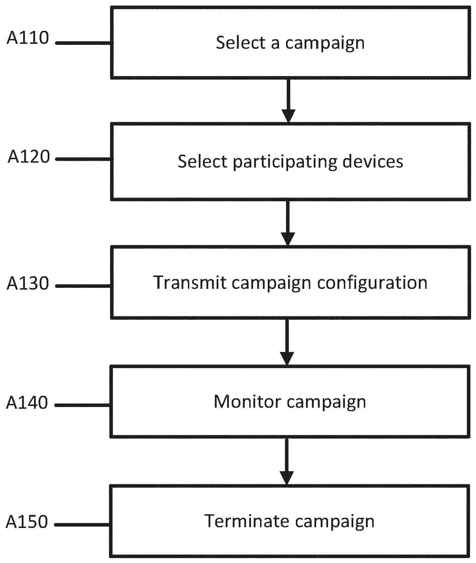

Figure 6 depicts an example workflow for managing distributed machine learning in a heterogeneous environments using a plurality of distributed worker devices 122 and the campaign server 125. As presented in the following sections, the acts may be performed using any combination of the components indicated in Figure 1, Figure 7, or Figure 9. The following acts may be performed by the device 122, the campaign server 125, the mapping system 121, or a combination thereof. Additional, different, or fewer acts may be provided. The acts are performed in the order shown or other orders. The acts may also be repeated. Certain acts may be skipped.

By using a plurality of distributed worker devices 122, the model is trained on a much larger volume of data on the edge than can be transferred to a centralized server for bandwidth, privacy, business, and timing reasons. The data, including any personal information, remains on the worker devices 122 and only the model parameters that encode low- and high-level concepts are shared centrally through the parameter server 137. Since the data stays on the worker devices 122, a reduced amount of data is needed to be transferred (e.g. image data/audio). Additionally, the model may be trained using a diverse set of data as certain data may not be easily transferred from the devices (for example, automotive sensor data). Finally, as the training occurs on the worker devices 122 maintained by third-parties, the cost to run the large models over huge datasets is at least partially borne by the users participating in the training process. The lifecycle of the training process is managed by the campaign server. Devices may be allocated and un-allocated. Updates may be pushed to the devices. The model and model parameters may be adjusted by the campaign server during the training process. The output is a finished campaign that includes a trained model and heuristics regarding the training process.

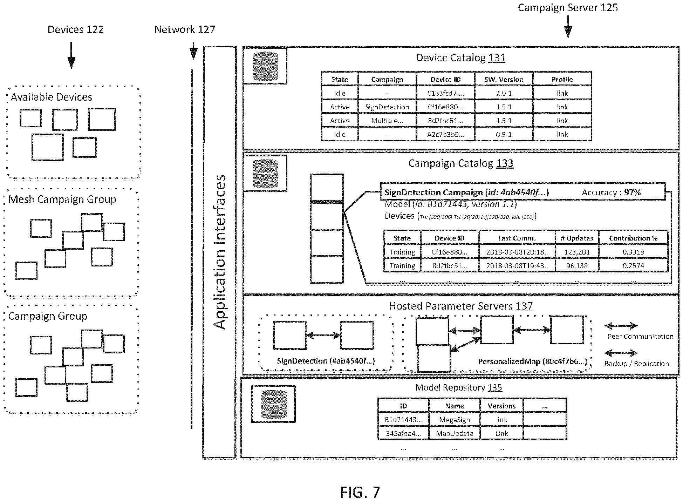

At act A110, a campaign is selected to be deployed in a heterogenous environment. Figure 7 depicts an example heterogenous environment includes devices 122, the network 127, and the campaign server 125. The campaign may be selected using a campaign interface provided by or connected to a campaign server 125. The campaign server 125 includes a device catalog 131, a model repository 135, a campaign catalog 133, and one or more hosted parameter servers 137. The device catalog 131 is configured to store data relating to the devices. The device catalog 131 may store device profiles for each device that is registered to participant. The device profiles may include data that describes the capabilities, security, and privacy of each device. The device catalog 131 may store the device profiles so that each the identity of the devices is not known to a user selecting devices for a campaign. The campaign catalog 133 or user may submit a query to the device catalog 131 for devices with certain attributes, for example, that acquire certain types of data and have certain processing capabilities. The device catalog 131 may filter available devices based on the query and return a list of possible devices.

The campaign catalog 133 is configured to store data related to each campaign run by the campaign server 125. The campaign catalog 133 is configured to host or communicate with the model repository 135. The campaign catalog 133 stores the current state of each campaign as it is run. If a user updates the campaign, the campaign catalog 133 communicates with the device catalog 131, the model repository 135, the participating devices, and the hosted parameter server 137 in order to push the updates. The campaign catalog 133 may also be configured to startup, monitor, and shutdown a campaign. The campaign catalog 133 may be configured to allocate devices, remove devices, add devices, or otherwise select devices based on eligibility. The campaign catalog 133 is configured to back up the state of a campaign and restore the backup. The campaign catalog 133 communicates with the parameter servers 137 (hosted or remote) to monitor the campaign.

The selected campaign includes a model and a set of campaign requirements. The model is stored within a model repository 135 of the campaign server 125. The campaign requirements are stored within the campaign catalog 133. When a user or system initiates a campaign, the system uses the programmatic or campaign management user interface to begin the process. The user defines the campaign through a label and any additional metadata, campaigns can be secured through access control lists defining what entities are able to manage operations in this campaign and participating devices. To initiate a campaign, the user provides a query to select the devices and a machine learning model to deploy within the campaign. The user may also provide devices with the role the devices will enact within a campaign. The roles may be defined by the user or the user may use standard roles that include, for example, test devices, training devices, inference devices, or others. Devices may participate in combinations of the roles of the above.

During campaign creation a model is selected to be deployed on the participating devices, the model is contained within a model repository 135. The models may each be uniquely tagged with a model ID, and versioned.

The model may be any model that is trained using a machine learning process. The model may be trained using processes such as support vector machine (SVM), boosted and bagged decision trees, k-nearest neighbor, Naive Bayes, discriminant analysis, logistic regression, and neural networks. In an example, a two-stage convolutional neural network is used that includes max pooling layers. The two-stage convolutional neural network (CNN) uses rectified linear units for the non-linearity and a fully-connected layer at the end for image classification.

In an embodiment, the model may be configured to be trained using an adversarial training process, e.g. the model may include a generative adversarial network (GAN). For an adversarial training approach, a generative network and a discriminative network are provided for training by the devices. The generative network is trained to identify the features of data in one domain A and transform the data from domain A into data that is indistinguishable from data in domain B. In the training process, the discriminative network plays the role of a judge to score how likely the transformed data from domain A is similar to the data of domain B, e.g. if the data is a forgery or real data from domain B.

In an embodiment, the model is configured to be trained using a gradient descent technique or a stochastic gradient descent technique. Both techniques attempt to minimize an error function defined for the model. The gradient descent technique attempts to minimize an error function for the model. Each device trains a local model using a set of local training data. The set of local training data may include a subset of data instances of the training data located on the device. Alternatively, the training data may sample the data instances multiple times. Whether or not the data instances are under or over sampled may be determined as a function of a threshold value provided by the parameter server 137. The parameter server 137 may update the threshold as the training proceeds. Training the model involves adjusting internal weights or parameters of the local model until the local model is able to accurately predict the correct outcome given a newly input data point. The result of the training process is a model that includes one or more local parameters that minimize the errors of the function given the local training data. The one or more local parameters may be represented as a parameter vector. As the local training data is limited the trained model may not be very accurate when predicting the result of an unidentified input data point. The trained model, however, may be trained to be more accurate given starting parameters that cover a wider swath of data. Better starting parameters may be acquired from the parameter server 137.

At act A120, a set of participating devices are selected as a function of a query. The set of participating devices should meet the one or more campaign requirements for data availability, compute capability and privacy restrictions. During campaign selection, the query is constructed against the devices within the device catalog 131 to select applicable devices. Examples of actions a user may perform are filtering devices based on geographic region, data quality/quantity and content availability, processing capabilities / hardware / software versions, usage patterns and device power on time/battery capacity, type of connection (Wi-Fi, LTE, etc.), roaming mode. The devices that match campaign criteria are selected and notified of their participation. Devices participating in a campaign may be modified at any time, where new devices are added or removed.

Prior to the acts of Figure 6, the device may be activated and/or registered with the campaign server 125. The process to activate a device into the environment begins when a device is completing a production, during a software upgrade, or if the device supports dynamic activation, the activation occurs during software installation. During the activation process a device securely registers itself into the device catalog 131 of the campaign server 125 and stores the device profile, sensor capabilities and data models, any additional metadata or security and legal constraints that would be required for a user to query devices during campaign creation The activation process may also include a step to explicitly request user consent to process or participate in certain processing of user data. With increasing scrutiny on data privacy, anonymization and trackability the activation process can evolve to define the restrictions as needed. After the device is activated, it maintains a passive state waiting for communication from the cloud services that a device has entered a new campaign and what its tasks should be. The communication is dependent on the capabilities of the device. Devices that can receive push notifications from the cloud services do not need a query loop for campaign assignment. Devices that are not able to receive push notifications must continuously poll the catalog for any tasks.

At act A130, a campaign configuration is transmitted to the set of participating devices. The campaign configuration may include the model, model parameters, campaign requirements, pool information, parameter server information, an agreement, a EULA etc. The campaign configuration may also include instructions for the type of data to use for the model, modifications that are to be made on the acquired data, sampling rates, and other data transformations. Once a campaign has been defined and devices and model have been selected, devices are notified of their participation in the campaign. The notification mechanism may depend on the device capability and campaign. Certain devices may be directly notified to start the campaign while other devices may require additional information, feedback, or negotiation. For example, certain devices may have the option of opting out of a campaign. Once devices are notified and a pool assigned, the devices download the campaign configuration and model properties/algorithm. The model is retrieved from the model repository 135, as well as any configuration parameters or settings that are unique to the campaign.

Once the model is retrieved the device goes into a processing loop, executing the tasks assigned locally and periodically communicating model parameters to the assigned parameter server 137. The loop periodically (Based on campaign settings and device capabilities) queries the campaign management system for any changes and uploads processing statistics to its profile in the device catalog 131. During the training of the model each device communicates with the parameter server 137 to retrieve the latest model parameters or upload its learned parameters for discrimination to other devices. In case of lack of connectivity while processing, devices store learned model parameters in a queue. The content of the queue is then transmitted to the parameter server 137 when the connectivity is restored. During model processing the device also communicates with the campaign management system to query for any changes to processing settings, device roles, and report on quality metrics. The campaign server 125 or parameter server 137 may be configured to apply noise to the aggregated model parameters, before the parameters are sent to the devices 122. This techniques would be useful when devices 122 computation capabilities are limited. Therefore, the effort of manipulating model parameters would be shifted to the parameter server

At act A140, the campaign server 125 monitors the set of participating devices as the devices train the model using a locally stored set of data. Throughout the lifecycle of a campaign various changes, actions and control parameters may need to be enacted. A campaign management system provides support so that the actions persist and are communicated to the devices participating in each campaign. A user might want to deploy an updated model, modify its configuration, modify the requirements of devices that participate in a campaign (resulting in new devices joining a pool or devices canceling participation). Not all actions need to result in communication or actions on a device, a user can save campaign state and current model parameters or export audits of campaign performance and device participation statistics.

During the training process, campaign actions that require device notifications are communicated to applicable devices. Devices may determine, based on the type of changes communicated through the campaign management notification message, if a model update is performed or if the settings can be applied during the existing model processing loop. Updates that require new models or new behaviors on existing model may result in the devices stopping current processing and retrieving new model and configuration settings from the model repository 135. Events that require this action may include, for example, updating to new model versions, resetting original settings and change of pool assignment (From training -> testing -> inference).

At act A150, the campaign server 125 terminates the campaign and outputs a trained model. When the system or user determines a campaign has reached its conclusion, the termination action is performed through the campaign management system. A termination message is then pushed to devices and registered within the campaign management system for pooling-based devices to receive notification and stop further processing.

In an embodiment, the campaign server, when creating a campaign may select whether a model can be subject to personalization. When a campaign is started, the information is sent over to the devices 122, along with the model. When the training phase for a campaign is over, each device 122 checks if the model allows for personalization. If that is the case, each device 122 locally clones the trained model and keeps on training/personalizing the cloned model, by using the data that will be produced by the device 122 from that moment on. Each device 122 will use the cloned model for future inference tasks. Personalized models may be remotely deactivated by the campaign server 125 at any time. In that case, the devices 122 will stop training the cloned model and will start using the original one.

In an embodiment, the output model may be used by an autonomous vehicle or navigation system to provide commands or instructions to the vehicle or user. The model may, for example, assist the vehicle or navigation system in identifying a position of the vehicle, identifying objects, and determining routes among other complex functions.

In an embodiment, the model may be used to determine depth prediction for car-mounted cameras. The model may predict the distance to objects accurately with only access to optical images. The model may be trained using local data on multiple devices that included both LIDAR and camera systems. The model may be deployed on cars that only include camera systems. The training data would include both the LIDAR data and optical images. The model minimization is calculated as the average difference in prediction of depth from camera and LIDAR.

In another embodiment, a model may be trained to estimate the weather at a location of a device based on sensor data. Other devices from different geographic regions/different sensor configurations may also learn to predict the weather. The model parameters are aggregated without sharing data to produce a generalized model. In this example, label of the data may be provided by a cloud-based weather service, downloaded to the devices, in areas with high accuracy in order to predict the weather in areas of poor accuracy/coverage of the cloud-based service. The result is a highly accurate and general model for weather prediction(estimation) on the device.

In another embodiment, a model that provides point of interest (POI) recommendations for customer's based on historical data or ETA of routes from logistics companies may be trained. The companies may be reluctant to share the data, due to its sensitivity from a privacy and business standpoint. In that case, the distributed, asynchronous machine learning algorithm may be deployed to share the model parameters rather than the data. The model may also be trained to provide recommendations, such as POIs, based on search data. Consumer behavior, e.g. searches and actions, may be kept private at the device while still helping train a model to provide better recommendation to other devices or consumers. In an example, a consumer or customer may search for a type of restaurant on their device. The consumer as a result of the search results makes a decision on where to go. The search and the results may be used as ground truth data to provide better recommendations for a future customer that may search on the same terms.

In another embodiment, a model may be trained for road sign detection. Training the model using distributed devices allows the model to have a huge quantity and diversity of data, which allows for a very general and accurate model to be trained. In another embodiment, a model may be trained to detect open parking spaces.

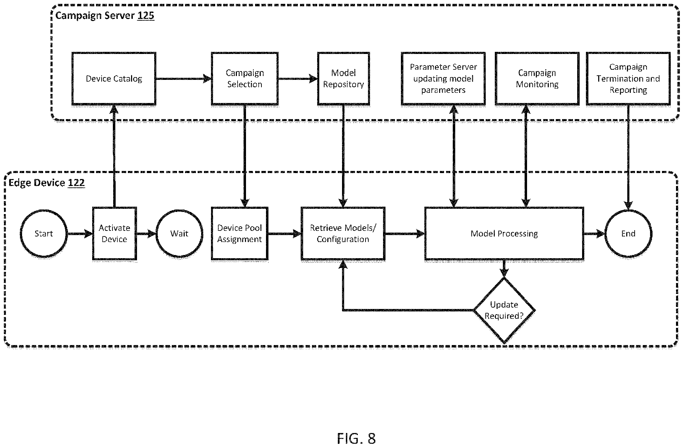

Figure 8 depicts another workflow for campaign deployment in a heterogenous environment. The workflow includes a software architecture for enabling managed distributed machine learning. The method solves the challenges that arise when the process and lifecycle of machine learning algorithms moves from homogenous or centralized environments (e.g. within server clusters or single devices or with similar hardware) to distributed and heterogeneous environments spanning cloud, corporate entities, infrastructure (cellular, networking, buildings and roadways) and edge devices with various hardware characteristic, restrictions and capabilities.

A plurality of devices are registered with a campaign server. During the activation process a device securely registers itself into a device catalog 131 of the campaign server and stores a device profile, sensor capabilities and data models, any additional metadata or security and legal constraints that would be required for a user to query devices during campaign creation. The activation process may also include a step to explicitly request user consent to process or participate in certain processing of user data. With increasing scrutiny on data privacy, anonymization and trackability the activation process may evolve to define the restrictions as needed.

After the device is activated, the device maintains a passive state waiting for communication from the campaign server that a device has entered a new campaign and what its tasks should be. The communication is dependent on the capabilities of the device. Devices that can receive push notifications from the campaign servers do not need a query loop for campaign assignment. Devices that are not able to receive push notifications must continuously poll the catalog for any tasks. The campaign server stores the device profile, sensor capabilities and models, any additional metadata or security and legal constraints that would be required for a user to query devices during campaign creation. The device profile and sensor capabilities may be received from the device during registration and updated at any point thereafter. The models may be received from a user or application and updated as required.

A campaign is initiated by selecting the devices. During campaign initiation a model is selected to be deployed on the participating devices, the model is contained within a model repository 135. The models are each uniquely tagged with a model ID, and versioned.

When a user or system initiates a campaign, it uses the programmatic or campaign management user interface to begin the process. The user defines the campaign through a label and any additional metadata, campaigns may be secured through access control lists defining what entities are able to manage operations in this campaign and participating devices. To initiate a campaign, a user provides a query to select the devices and a ML model to deploy within the campaign. The user also provides devices with the role they will enact within a campaign, roles are arbitrary but standard roles would be Test Devices, Training Devices, Inference Devices although devices may also participate in combinations of the above. During campaign creation, a query is constructed against the devices within the device catalog 131 to select applicable devices. The query may filter devices based on geographic region, data quality/quantity and content availability, processing capabilities/hardware/software versions, usage patterns and device power on time/battery capacity, type of connection (Wi-Fi, LTE, etc.), roaming mode. The devices that match campaign criteria are selected and notified of their participation. Devices participating in a campaign can be modified at any time where new devices are added or removed.

Once a campaign has been defined, devices and model has been selected, devices are notified of their participation in the campaign. The notification mechanism depends on device capability. Once devices are notified and their pool assigned, the devices will begin to download the campaign configuration and model properties/algorithm. The model is retrieved from the model repository 135, as well as any configuration parameters or settings that are unique to the campaign.

Once the model is retrieved the device goes into a processing loop, executing the tasks assigned locally and periodically communicating model parameters to the assigned parameter server 137. The loop periodically (Based on campaign settings and device capabilities) queries the campaign management system for any changes and uploads processing statistics to its profile in the device catalog 131. During model processing the device communicates with the parameter server 137 to retrieve the latest model parameters or upload its learned parameters for discrimination to other devices. In case of lack of connectivity while processing, devices store learned model parameters in a queue. The content of the queue is then transmitted to the parameter server 137 when the connectivity is restored. During model processing the device also communicates with the campaign management system to query for any changes to processing settings, device roles, and report on quality metrics.

Throughout the lifecycle of a campaign various changes, actions and control parameters would need to be enacted, the Campaign Management system enables these actions to persist and be communicated to the devices participating in each campaign. A user may want to deploy an updated model, modify its configuration, modify the requirements of devices that participate in a campaign (resulting in new devices joining a pool or devices canceling participation). The user may select transformation or modifications to be performed by the devices prior to training the model. For example, the user may select certain types of data to be used or the user may provide modifications or noise for the data to be used in training the model. Not all actions need to result in communication or actions on a device, a user may save campaign state and current model parameters or export audits of campaign performance and device participation statistics. Campaign actions that require device notifications are communicated to applicable devices. Devices will determine, based on the type of changes communicated through the campaign management notification message, if a model update is performed or if the settings can be applied during the existing model processing loop.

Updates that require new models or new behaviors on existing model could result in the devices to stop current processing and retrieve new model and configuration settings from the model repository 135. Events that require this action could be updating to new model versions, resetting original settings and change of pool assignment (From training -> testing -> inference). When the system or user determines a campaign has reached its conclusion, the termination action is performed through the campaign management system. The termination message is then pushed to devices and registered within the campaign management system for pooling-based devices to receive notification and stop further processing.

Devices 122, after a training campaign is over, might keep training their models locally, without sending model parameters to the parameter server. This would allow each edge device to obtain and use a more personalized model, which, in turn, could result in better inference results for the user.

The user of the campaign server 125, when creating a campaign selects whether a model can be subject to personalization. When a campaign is started, this information is sent over to the devices 122, along with the model. When the training phase for a campaign is over, each device 122 checks if the model allows for personalization. If that is the case, each device 122 locally clones the trained model and keeps on training/personalizing the cloned model, by using the data that will be produced by the device from that moment on. Each device 122 uses the cloned model for future inference tasks. Personalized models may be remotely deactivated by the campaign server 125 at any time. In that case, devices 122 will stop training the cloned model and will start using the original one.

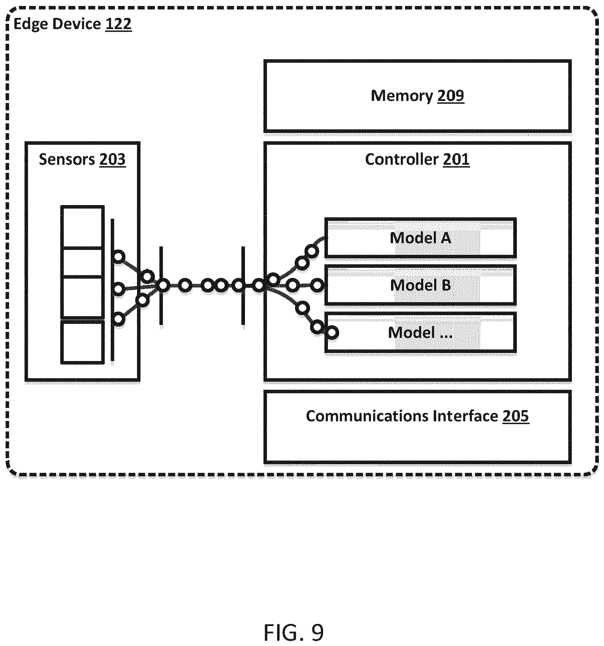

Figure 9 illustrates an example device 122 of the system of Figure 1. The device 122 may be configured to collect, transmit, receive, process, or display data. The device 122 is where the end-user/sensor/data originates. Each device may include varying degrees of compute, storage, and network capabilities. E.g. smartphones, vehicles, smartwatches, network switches and servers. The device is where the processing and machine learning algorithms execute. Within the device is a model execution environment that provides a restricted sandbox for models to be deployed, managed and monitored through their lifecycle. The model execution environment has access to a device profile which contains a description of the hardware capabilities and configuration of the device, the profile also contains data licenses and restrictions on access. Core services are provided to the running models to support logging, authentication, authorization and access control to onboard sensors and cloud services, and services related to metrics collection, error reporting and deployment/control of models unto the device. The models obtain data through a data collection interface that makes available local data from sensors through a common API. The data within this interface is encoded through a defined schema that is stored within the device profile.

The device profile restricts what data is available and operations that can be performed on this data, including the ability to remotely transfer samples to cloud services for troubleshooting and model improvements, system usage restrictions such as battery, processing and memory limitations, process scheduling policies (nightly/off peak/wired only), and more broadly any preferences and limitations the regulate usage. The environment also captures performance metrics and ensures models within this environment are signed by their owning entities to prevent malicious logic from executing as a model from untrusted sources.

The device 122 is configured to modify, filter, or otherwise prepare acquired data for use in training the machine learning model. The modifications and filtering may include may transforming the data, augmenting the data, cleaning the data, and/or sampling the data. As an example of transformation, the input layer of a model might have a different shape with respect to the input data. Therefore, data needs to be reshaped to fit into the model, e.g., the model accepts images of size 256x256, but the input data format is 1024x768; therefore, the input images may be resized, cropped or a combination of both. Examples of other data manipulation operations might be rotation, blurring, change in contrast, etc.

As an example of data augmentation, sometimes input data might not be sufficient for the model to generalize correctly, therefore it is necessary to augment it with synthetically generated data. For example, in the case of image geolocation, the input data sets that contain pictures of streets are augmented with some artificially generated images that simulated different weather conditions.

As an example of data cleansing, in order to increase the privacy of edge devices, it might be necessary to remove some unnecessary features from the input data so that the trained model will not be able to generalize on the features. This may be achieved by introducing noise either in the input data, or in the model parameters to be shared with the parameter server. Compression may also be used for the model parameters.

The addition of noise (in accordance to some probability distribution) to the model parameters may decrease the capability of the aggregated model to generalize on features that the model should not learn about. For example, in case of classification between male and female people through images, a model might learn about features like earrings, necklaces, glasses, etc.; after the training phase, the model could potentially leak information regarding the pictures of the people in the training data set. The addition of noise to the model parameters reduces the capability of the model to generalize on such features, while still achieving a high accuracy rate. The implementation of such a feature protects edge devices against a subset of potentially malicious devices that might be interested in participating into a training campaign in order to derive additional information, potentially leaked by the aggregated model.

In case of addition of noise in the model parameters, the user of the campaign server 125 may select the type of noise each device 122 should add to its own model parameters. The user may tune the type of noise being added by the devices 122 depending on the test results.

In case of compression of model parameters, the user of the campaign server 125 specifies a customized compression technique, or selects one from a collection of compression techniques. Some techniques might require the parameter server to de-compress the received model parameters before aggregation and, similarly, the devices 122 to de-compress the received aggregated model parameters sent from the parameter server; for such techniques, a de-compression algorithm needs to be specified or chosen by the user of the campaign server 125. The chosen compression algorithm is sent to the parameter server before the training phase is started, and to the edge devices when the model to be trained is sent to them. If a technique that requires decompression is chosen, a decompression algorithm has to be specified and it gets sent both to the parameter server 137 and to the participating devices 122, before the training phase is started. The devices 122 apply the compression algorithm to the model parameters before sending them to the parameter server 125. For techniques that do not need decompression, the parameter server applies the aggregation scheme to them and sends the result back to the device(s) 122. Conversely, for the techniques that need decompression, the parameter server 137, upon reception of the model parameters from a device 122, decompresses the model parameters, applies the chosen aggregation scheme and sends the result back to the edge device(s).
Before aggregated model parameters may be used, the devices 122 receiving the aggregated model parameters will have to decompress them, in case a compression technique that needs decompression was used.

As an example of data sampling, sometimes not all of the data instances are useful to train a machine learning model; therefore, in order to save resources and speed up the training process, the device 122 may process a sub-sample of the data. Some other times, data is produced by sensors of the device 122 at a very fast pace; if not all of the data can be stored before being processed, a device may drop some data samples.

The device 122 is configured to train a locally stored model using locally stored data in conjunction with other devices 122. The device 122 may also be referred to as a probe 122, a mobile device 122, a navigation device 122, or a location aware device 122. The device 122 includes a controller 201, a memory 209, sensors 203, and a communication interface 205. The device 122 may also include an output interface that may present visual or non-visual information such as audio information. Additional, different, or fewer components are possible for the mobile device 122. The navigation device 122 may be smart phone, a mobile phone, a personal digital assistant (PDA), a tablet computer, a notebook computer, a personal navigation device (PND), a portable navigation device, and/or any other known or later developed mobile device. In an embodiment, a vehicle may be considered a device 122, or the device 122 may be integrated into a vehicle. The device 122 may receive or collect data from one or more sensors in or on the vehicle.

The device 122 may be configured to execute routing algorithms using a geographic database 123 stored in memory 209 to determine an optimum route to travel along a road network from an origin location to a destination location in a geographic region. Using input from an end user, the device 122 examines potential routes between the origin location and the destination location to determine the optimum route in light of user preferences or parameters. The device 122 may then provide the end user with information about the optimum route in the form of guidance that identifies the maneuvers required to be taken by the end user to travel from the origin to the destination location. Some devices 122 show detailed maps on displays outlining the route, the types of maneuvers to be taken at various locations along the route, locations of certain types of features, and so on.

The device 122 is configured to identify a starting location and a destination. The starting location and destination may be identified through an input from an input interface. The input interface may be one or more buttons, keypad, keyboard, mouse, stylus pen, trackball, rocker switch, touch pad, voice recognition circuit, or other device or component for inputting data to the mobile device 122. The input interface and an output interface may be combined as a touch screen that may be capacitive or resistive. The output interface may be a liquid crystal display (LCD) panel, light emitting diode (LED) screen, thin film transistor screen, or another type of display. The output interface may also include audio capabilities, or speakers.

The device 122 may be configured to acquire data from one or more sensors 203. The device 122 may use different sensors such as cameras, microphones, LIDAR, radar, ultrasonic, or other sensors to acquire video, image, text, audio, or other types of data. The acquired data may be used for training one or more models stored on the device 122.

A positional point may be identified using a sensor 203 such as positional circuitry, e.g. GPS or other positional inputs. The positioning circuitry, which is an example of a positioning system, is configured to determine a geographic position of the device 122. In an embodiment, components as described herein with respect to the navigation device 122 may be implemented as a static device. The navigation device 122 may identify a position as the device travels along a route using the positional circuity. For indoor spaces without GPS signals, the navigation device 122 may rely on other geolocations methods such as LIDAR, radar, Wi-Fi, beacons, landmark identification, inertial navigation (dead reckoning), among others.

The device 122 may store one or more models in memory 209. The device 122 may be configured to train the model using locally acquired data and store model parameters in the memory 209. The memory 209 may be a volatile memory or a non-volatile memory. The memory 209 may include one or more of a read only memory (ROM), random access memory (RAM), a flash memory, an electronic erasable program read only memory (EEPROM), or other type of memory. The memory 209 may be removable from the mobile device 122, such as a secure digital (SD) memory card. The memory may contain a locally stored geographic database 123 or link node routing graph. The locally stored geographic database 123 may be a copy of the geographic database 123 or may include a smaller piece. The locally stored geographic database 123 may use the same formatting and scheme as the geographic database 123. The navigation device 122 may determine a route or path from a received or locally geographic database 123 using the controller 201. The controller 201 may include a general processor, a graphical processing unit (GPU), a digital signal processor, an application specific integrated circuit (ASIC), field programmable gate array (FPGA), analog circuit, digital circuit, combinations thereof, or other now known or later developed processor. The controller 201 may be a single device or combinations of devices, such as associated with a network, distributed processing, or cloud computing. The controller 201 may also include a decoder used to decode roadway messages and roadway locations.

The communication interface 205 may include any operable connection. An operable connection may be one in which signals, physical communications, and/or logical communications may be sent and/or received. An operable connection may include a physical interface, an electrical interface, and/or a data interface. The communication interface 205 provides for wireless and/or wired communications in any now known or later developed format. The communication interface 205 may include a receiver / transmitter for digital radio signals or other broadcast mediums. The communication interface 205 may be configured to communicate model parameters with a parameter server 137 and receive instructions or updates from the campaign server 125.

The device 122 is further configured to request a route from the starting location to the destination. The device 122 may further request preferences or information for the route. The device 122 may receive updated ambiguity ratings or maps from the mapping platform 121 e.g. for geographic regions including the route. The device 122 may communicate with the mapping platform 121 or other navigational service using the communication interface 205. The communication interface 205 may include any operable connection. An operable connection may be one in which signals, physical communications, and/or logical communications may be sent and/or received. An operable connection may include a physical interface, an electrical interface, and/or a data interface. The communication interface 205 provides for wireless and/or wired communications in any now known or later developed format. The communication interface 205 may include a receiver / transmitter for digital radio signals or other broadcast mediums. A receiver / transmitter may be externally located from the device 122 such as in or on a vehicle. The route and data associated with the route may be displayed using the output interface. The route may be displayed for example as a top down view or as an isometric projection.

In certain embodiments, the device 122 may be included in or embodied as an autonomous vehicle. As described herein, an autonomous driving vehicle may refer to a self-driving or driverless mode that no passengers are required to be on board to operate the vehicle. An autonomous driving vehicle may be referred to as a robot vehicle or an autonomous driving vehicle. The autonomous driving vehicle may include passengers, but no driver is necessary. Autonomous driving vehicles may park themselves or move cargo between locations without a human operator. Autonomous driving vehicles may include multiple modes and transition between the modes.

As described herein, a highly automated driving (HAD) vehicle may refer to a vehicle that does not completely replace the human operator. Instead, in a highly automated driving mode, the vehicle may perform some driving functions and the human operator may perform some driving functions. Vehicles may also be driven in a manual mode that the human operator exercises a degree of control over the movement of the vehicle. The vehicles may also include a completely driverless mode. Other levels of automation are possible.

The autonomous or highly automated driving vehicle may include sensors for identifying the surrounding environment and location of the car. The sensors may include GNSS, light detection and ranging (LIDAR), radar, and cameras for computer vision. Proximity sensors may aid in parking the vehicle. The proximity sensors may detect the curb or adjacent vehicles. The autonomous or highly automated driving vehicle may optically track and follow lane markings or guide markings on the road. The worker device 122 registers with a campaign server, receives a campaign notification, downloads a model and model parameters, and then trains the model.

The worker device 122 trains the model using locally acquired data instances. The data instances may be data acquired from, for example, a sensor 203 in communication with the worker device 122 (camera, LIDAR, microphone, keypad, etc.). The data instances may be provided to the worker device 122 by another device or sensor 203. The data instances may be used as training data for training a model. The training data on each of the devices is not independently and identically distributed (non-I.I.D.). The distribution of data on two given devices may be different and unbalanced (devices have different orders of magnitudes of training data points). In an example, for image data, one device may have several gigabytes of image data that relates to images taken while traversing a highway and another device may only have a few megabytes of image data acquired while traversing a rural road. Both sets of data may be useful to train an image recognition model even though the sets of data include images from two disparate areas and have magnitudes of difference in quantity. The quality of data may also differ between devices. Certain devices may include higher quality sensors or may include more storage for data allowing higher quality data to be captured.

The worker device 122 trains the model using the first set of data instances and a first parameter. The worker device 122 includes a model and local training data. In an embodiment, the training data is labeled. Labeled data is used for supervised learning. The model is trained by imputing known inputs and known outputs. Weights or parameters are adjusted until the model accurately matching the known inputs and output. In an example, to train a model to identify traffic signs using acquired image data, images of traffic signs - with a variety of configurations - are required as input variables. In this case, light conditions, angles, soiling, etc. are compiled as noise or blurring in the data as the model needs to be able to recognize, for example, a traffic sign in rainy conditions with the same accuracy as when the sun is shining. The labels, the correct designations, for such data may be assigned manually or automatically. The correct set of input variables and the correct classifications constitute the training data set.

Labels may be provided by, for example, requesting additional input from a user (requesting a manual annotation), derived from additional data (parsing textual descriptions), or by incorporating additional data from other sensors. In an example, for a model that identifies location based from image data, the labels for the training set may be provided by a global positioning system (GPS) or positional sensor. The model may be used in situations where the GPS sensor is unreliable or in addition to the GPS sensor. In this scenario, for the training data, the GPS or positional sensor may be more accurate than locating by image recognition. Another example includes training an optical camera to recognize depth using LIDAR as the ground truth, so that the optical camera may recognize depth in cars without LIDAR.

Other methods for labeling data may be used, for example, a cloud-based service may give accurate, albeit incomplete, labels that be downloaded from the cloud to the edge. Delayed user interactions may also provide the label. For example, if a model is attempting to recognize whether a stop sign exists a certain intersection, then the behavior of the driver (whether the driver stops at the intersection) may be used to generate a label for the data.

In an embodiment, the training data is labeled, and the model is taught using a supervised learning process. A supervised learning process may be used to predict numerical values (regression) and for classification purposes (predicting the appropriate class). A supervised learning processing may include processing images, audio files, videos, numerical data, and text among other types of data. Classification examples include object recognition (traffic signs, objects in front of a vehicle, etc.), face recognition, credit risk assessment, voice recognition, and customer churn, among others. Regression examples include determining continuous numerical values on the basis of multiple (sometimes hundreds or thousands) input variables, such as a self-driving car calculating the car's ideal speed on the basis of road and ambient conditions.

The model may be any model that is trained using a machine learning process. The model may be trained using processes such as support vector machine (SVM), boosted and bagged decision trees, k-nearest neighbor, Naive Bayes, discriminant analysis, logistic regression, and neural networks. In an example, a two-stage convolutional neural network is used that includes max pooling layers. The two-stage convolutional neural network (CNN) uses rectified linear units for the non-linearity and a fully-connected layer at the end for image classification.

The worker device 122 transmits a second parameter from the trained model to the parameter server 137. The second parameter may be parameter vector that is generated as a result of training the model using the training data. In an embodiment, the worker device 122 may transmit a set of parameters from the model. A gradient, may for example, include thousands or millions of parameters. The set of parameters may be transmitted or compressed in to, for example, a parameter vector that is transmitted to the parameter server 137. In an embodiment, the second parameter set may be a randomly chosen subset of parameters or parameter vectors. The subset may also be, for example, the second parameter set encoded using a sparsely encoding scheme.

The worker device 122 receives a third parameter from the parameter server 137. In an embodiment, the parameter server 137 stores a central parameter vector that the parameter server 137 updates each time a worker unit sends it a local parameter or local parameter vector. The parameter server 137 using a weighting function and a weight (Alpha) so that newly received local parameter vectors do not overwhelm the central parameter vector. In an embodiment, the parameter server 137 updates the central parameter using equation 1 described above. The updated central parameter may be transmitted to the device prior to the updated central parameter being altered again by, for example, another device requesting a new central parameter. The updating of the central parameter set by one device may also be decoupled from that same device getting back an update. For example, the device may send an updated local parameter set, and then immediately get back the latest central parameters from the parameter server 137, without the central parameter set having been updated (yet) by the device's local parameters.

The Alpha value may be assigned or adjusted manually depending on the type of model, number of devices, and amount of data. The Alpha value may be assigned initially and adjust over time or may be static for the entirety of the training process. One method for setting an initial Alpha value is to use a set of test device and benchmark databases. For example, two benchmark datasets that may be used to identify an Alpha value include the Modified National Institute of Standards and Technology database (MNIST) digit recognition dataset and the Canadian Institute for Advanced Research (CIFAR-10) dataset. Both datasets may be distributed with un-even distribution of data, both in terms of the data labels (restricted to several data labels per node, overlapping and non-overlapping) and the quantity of data (different orders of magnitude between nodes, with some less than the batch size). The test training process may be run on the test devices to identify an Alpha value that is correct for the training process given time, bandwidth, and data volume constraints. A test training process may also identify a quality of the model. One method for testing is to sample training data from devices (e.g. randomly select a training data point from a device before it is every used and then remove it from the training data set) and aggregate the samples centrally. Due to privacy concerns, the testing may only be implemented with user acknowledgement. Another method is to locally keep a training and testing data set, e.g. randomly chosen for each data point and, for local training, only local training data is used. After each local training session (certain number of epochs, or other suitably defined iterations) the local test result may be sent to a global test aggregation server that aggregates the test results.

In an embodiment, the Alpha value is set between .01 and .2 indicating that new incoming parameters are discounted between 80% and 99% when generating the new central parameter vector. Alternative values of Alpha may be used for different processes or models.

The worker device 122 may select another set of data instances to be used as training data. In an embodiment, the quantity of the data instances in the local training data is regulated by either an original threshold value or if applicable, an updated threshold value received from the parameter server 137. In an embodiment, the threshold is set just once, prior to the start of the training procedure in the workers. The workers meet this constraint by means of over/sub-sampling: In case the number of instances available to the worker is larger than the threshold (m > τ), the worker samples τ instances out of its data and performs training using just these instances. In case the number of data points available to the worker is smaller than the threshold (m < τ), the worker samples β instances out of its data and then repeatedly reads all data instances α times so that: β + α ^{∗} m = τ. This way, all workers process the same number of data instances before sending an update to the server and, because their processing power is the same, the workers have similar update rates when sending parameters to the server. Therefore, no single worker dominates the dynamics of the aggregation in the server.

The worker device 122 may use the same local training data or may update the training data with newly collected sensor data. The training data may be weighted by age or may be cycled out by the device. For example, data older than a day, month, or year, may be retired and no longer used for training purposes. Data may also be removed or deleted by a user or automatically by the device. Additional data may be added to the training data set as the data is collected. In an embodiment, the worker device 122

The worker device 122 retrains the model using the local training data and the third parameter. The model is trained similarly to the act A130. The difference for each iteration is a different starting point for one or more of the parameters in the model. The central parameter vector that is received may be different than the local parameter vector generated earlier by the device

The term "computer-readable medium" includes a single medium or multiple media, such as a centralized or distributed database, and/or associated caches and servers that store one or more sets of instructions. The term "computer-readable medium" shall also include any medium that is capable of storing, encoding, or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random-access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated hardware implementations, such as application specific integrated circuits, GPUs programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in the specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in the application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random-access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a GPS receiver, to name just a few. Computer readable media suitable for storing computer program instructions and data include all forms of non-volatile memory, media, and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The memory may be a non-transitory medium such as a ROM, RAM, flash memory, etc. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A campaign management system for assigning a machine learning task to a plurality of devices, the campaign management system comprising:
a device catalog configured to store device attributes of a plurality of devices;
a campaign catalog configured to store control parameters and the machine learning task, the campaign catalog configured to select a set of participating devices from the plurality of devices as a function of the device attributes, the machine learning task, and the control parameters; the campaign catalog configured to communicate the machine learning task and model parameters to the set of participating devices; and
at least one parameter server configured to communicate with each device of the set of participating devices and update the machine learning task and the model parameters as a function of model parameters received from the set of participating devices.

2. The campaign management system of claim 1, wherein the device catalog is further configured to register the plurality of devices with the campaign management system.

3. The campaign management system of claim 1, wherein the device catalog is further configured to store a current state of each device of the plurality of devices.

4. The campaign management system of claim 1, wherein the device attributes comprise at least restrictions on what actions each device can perform through licensing of data, usage consent from an owning entity, and physical device properties comprising processing capabilities, memory availability, storage, and restrictions on other allocation of resources.

5. The campaign management system of claim 1, wherein the campaign catalog is configured to add or remove at least one device to or from the set of participating devices.

6. The campaign management system of claim 1, wherein the campaign catalog is configured to modify campaign parameters or a rate of contribution from individual devices, setup profiles for parameter server deployment schemes, modify control parameters for the machine learning task, add additional devices, modify restrictions, or deploy new models with configurable deployment schemes.

7. The campaign management system of claim 1, wherein the campaign catalog is configured to save a state of the machine learning task for restore in case of disaster recovery, recovery from other errors during runtime, or reanimation after the machine learning task is terminated.

8. The campaign management system of claim 1, wherein a visibility of devices during selection is controlled by access rights and permission granted by a governing entity and device profile restrictions.

9. The campaign management system of claim 1, wherein the machine learning task is training a model to identify a feature in an image.

10. A method for assigning a machine learning task in a heterogenous environment, the method comprising:
selecting, by a processor, a model for the machine learning task to be deployed, the model stored within a model repository;
selecting, by the processor, a set of participating devices that meet one or more campaign requirements for data availability, compute capability or privacy restrictions;
transmitting, by the processor, a campaign configuration, the model, and model parameters to each of the set of participating devices to each of the set of participating devices;
monitoring, by the processor, the set of participating devices, wherein the set of participating devices are configured for training the model using a locally acquired data instance, the set of participating devices further configured to transmit a parameter vector of the trained model to the processor and receive in response, an updated central parameter vector from the processor, wherein the set of participating devices are further configured to retrain the model using the updated central parameter vector; and
outputting, by the processor, the trained model.

11. The method of claim 10, further comprising:
registering, by the processor, a device profile for each of the set of participating devices, the device profile comprising data availability, compute capability and privacy restrictions for each of the set of participating devices.

12. The method of claim 10, wherein the set of participating devices is selected from a plurality of devices as a function of the data availability, compute capability or privacy restrictions of devices of the plurality of devices.

13. The method of claim 10, wherein monitoring the set of participating devices comprises:
updating the model, the campaign configuration, or the set of participating devices.

14. The method of claim 10, wherein monitoring the set of participating devices comprises:
collecting statistics from the set of participating devices while training the model; and
updating the campaign configuration as a function of the statistics.

15. A computer-readable, non-transitory medium storing a program that causes a computer to execute a method comprising:
registering, by a campaign server, a plurality of devices;
storing, by the campaign server, a device profile of each of the registered plurality of devices;
initiating, by the campaign server, a campaign with a subset of devices that meet a set of campaign requirements and a model;
transmitting, by the campaign server, the model to the subset of devices;
monitoring, by the campaign server, a training process by the subset of devices;
terminating, by the campaign server, the campaign when the training process finishes; and
outputting, by the campaign server, a trained model.
